# FASCICULE DE BREVET EUROPEEN

(11) **EP 1 362 753 B1**
(45) Date de publication et mention de la délivrance du brevet: **06.06.2018**
(21) Numéro de dépôt: 03101233.9
(22) Date de dépôt: 05.05.2003
(51) Int. Cl.: B60R 25/04, B60R 25/10, B60R 25/24, H04K 3/00, H04W 16/14

(54) **COMMANDE D'UN SYSTÈME D'ACCÈS ET/OU DE DÉMARRAGE D'UN VÉHICULE AUTOMOBILE DANS UNE ZONE DE PERTURBATION DE FRÉQUENCES**
STEUERUNG EINES SYSTEMS FÜR DEN ZUGANG UND/ODER DEN START EINES KRAFTFAHRZEUGS IN EINER FREQUENZGESTÖRTEN ZONE
CONTROL FOR ACCESSING AND/OR STARTING A MOTOR VEHICLE IN A FREQUENCY DISTURBED AREA

(30) Priorité: 17.05.2002 FR 0206395
(43) Date de publication de la demande: 19.11.2003
(73) Titulaire: VALEO ELECTRONIQUE, 94042 Creteil Cédex (FR)
(72) Inventeur: Garnault, Joel, 95110 Sannois (FR); Caresche, François, 91800 Brunoy (FR); Leconte, Eric, 94450 Limeil-Brévannes (FR)
(74) Mandataire: Pothmann, Karsten

(56) Documents cités:
- US-A- 5 142 691
- US-B1- 6 384 710

## Description

La présente invention concerne les systèmes utilisés pour permettre et interdire l'accès à un véhicule automobile et/ou pour permettre le démarrage d'un tel véhicule sur la base de la transmission de signaux électromagnétiques. L'invention est plus précisément relative aux systèmes de sécurisation d'accès de type télécommande radiofréquence ou mains-libres, et aux systèmes de sécurisation de démarrage de type mains-libres.

On connaît aujourd'hui des systèmes dits mains-libres comprenant un équipement d'identification situé à bord du véhicule automobile, adapté pour l'échange de signaux électromagnétiques, dans une ou plusieurs zones prédéfinies, avec un identifiant portatif se présentant par exemple sous forme de clé ou de badge au format d'une carte de crédit.

Certains de ces systèmes sont utilisés pour sécuriser l'accès au véhicule automobile. Plus précisément, pour permettre l'accès au véhicule, il est connu de procéder à une décondamnation automatique de la serrure d'au moins un ouvrant lorsque l'identifiant porté par l'utilisateur a été authentifié par l'équipement d'identification situé sur le véhicule suite à l'échange de signaux électromagnétiques. Cet échange de signaux électromagnétiques peut être initié suite à l'actionnement par l'utilisateur d'un commutateur situé au voisinage de l'ouvrant, par exemple au niveau de la poignée de l'ouvrant. Différents types de commutateurs sont connus qui vont du bouton mécanique fonctionnant comme un interrupteur, aux capteurs de type tactile ou encore optique qui détectent la coupure d'un faisceau optique par la main de l'utilisateur. En variante, il est connu également d'utiliser un capteur qui détecte la présence d'un utilisateur au voisinage de l'ouvrant, de manière à déclencher au plus tôt la phase d'authentification.

Quelle que soit la façon dont l'échange de signaux entre l'équipement d'identification et l'identifiant portatif est initié, cet échange consiste généralement en un signal d'interrogation émis par l'équipement d'identification, auquel l'identifiant va répondre avec un signal de réponse contenant des données d'identification. L'équipement d'identification pourra par la suite comparer ces données d'identification avec ses propres données, et autoriser ou non la décondamnation de l'ouvrant en fonction du résultat de la comparaison.

Dans certains systèmes mains-libres connus, le signal d'interrogation est émis en basse fréquence, typiquement 125 KHz. Dans d'autres systèmes, ce signal d'interrogation est émis en radiofréquence, typiquement de l'ordre de 433 MHz. Dans les deux types de systèmes, le signal de réponse est toujours émis en radiofréquence, généralement également à 433 MHz.

Lorsque l'utilisateur quitte son véhicule, il est connu d'initier également un échange de signaux électromagnétiques, par exemple sur détection de l'ouverture puis fermeture de l'ouvrant. On peut alors effectuer une condamnation automatique de l'ensemble des ouvrants dès lors que l'équipement d'identification ne reçoit plus de signal de réponse, traduisant le fait que l'utilisateur s'éloigne de son véhicule.

Il est également connu d'utiliser un système mains-libres pour sécuriser le démarrage d'un véhicule automobile. Dans certains cas, l'équipement d'identification peut comprendre un lecteur de badge dans lequel l'identifiant portatif peut être inséré. Suite (ou parallèlement) à une action volontaire du conducteur, par exemple par appui sur un bouton de démarrage, l'échange de signaux entre le lecteur et l'identifiant est réalisé afin de permettre une authentification, et autoriser ou non le démarrage. L'échange de signaux est effectué ici en basse fréquence (lecteur en mode dit transpondeur). En variante, on peut également prévoir de ne pas avoir de lecteur de badge, l'échange de signaux entre l'équipement d'identification et l'identifiant portatif s'effectuant en radiofréquence.

Un tel système mains-libres de sécurisation du démarrage peut être utilisé conjointement avec le système de sécurisation de l'accès, l'identifiant portatif étant de préférence le même pour les deux fonctionnalités.

En variante, on peut prévoir que le système mains-libres ne soit utilisé qu'à la sécurisation du démarrage, la sécurisation de l'accès au véhicule étant effectuée quant à elle par une télécommande envoyant des signaux RF à un récepteur RF situé sur le véhicule de façon à commander la condamnation ou la décondamnation des ouvrants. On prévoit alors de préférence que la télécommande fasse partie intégrante de l'identifiant portatif.

Un problème auquel ce type de systèmes utilisant des signaux radiofréquences peut être confronté est celui de la non détection des signaux émis due à la présence de signaux perturbateurs dans une zone donnée dans lequel le véhicule automobile est à l'arrêt. De tels signaux peuvent en effet empêcher notamment que :
- les signaux RF issus d'une télécommande pour commander la fermeture ou l'ouverture d'au moins un ouvrant du véhicule soient reconnus par le récepteur RF situé sur le véhicule ;
- les signaux RF envoyés par un identifiant à un équipement d'identification pour permettre son authentification et autoriser ou non l'accès et/ou le démarrage du véhicule automobile soient reconnus par l'équipement d'identification ;
- les signaux RF envoyés par un identifiant à un équipement d'identification lorsque l'utilisateur s'éloigne du véhicule soient reconnus par l'équipement d'identification.

Ainsi, l'utilisateur peut avoir l'impression que sa télécommande, malgré des actions répétées, ou son système mains-libres ne fonctionne pas alors que le problème est en fait lié à une zone géographique donnée dans laquelle des signaux perturbateurs sont générés, volontairement ou non, de façon continue ou complètement aléatoirement.
Ces signaux perturbateurs peuvent être par exemple émis par des émetteurs de télévision qui peuvent générer des signaux dont les harmoniques correspondraient à la fréquence utilisée dans les systèmes mains-libres ou télécommandes, typiquement 433 MHz.

Bien entendu, tous les systèmes de sécurisation d'accès et/ou de démarrage sont toujours doublés d'une solution de secours de façon à permettre à l'utilisateur, en cas de défaillance du système, de pouvoir néanmoins ouvrir et/ou démarrer son véhicule. Cependant, ces solutions de secours ont généralement pour but de pallier au problème d'autonomie du dispositif portatif, généralement alimenté par une pile, ou de l'équipement relié à la batterie du véhicule.

Ainsi, l'utilisateur pourra être agacé à l'utilisation et insister sur l'utilisation de sa télécommande ou de son badge avant de penser à utiliser la solution de secours.

Plus grave encore, dans le cas de la fonction de verrouillage automatique des ouvrants sur l'éloignement de l'utilisateur, dans laquelle le verrouillage ne s'effectue que lorsque l'utilisateur est à plus de cinq mètres de son véhicule, l'utilisateur, au mieux, s'apercevra du mauvais fonctionnement, et devra revenir à son véhicule, ou au pire, quittera le véhicule en étant convaincu, à tort, qu'il s'est verrouillé automatiquement.

Cela peut également perturber le fonctionnement de certains systèmes mains-libres qui prévoient d'empêcher toute condamnation des ouvrants du véhicule tant que le badge est détecté comme étant à l'intérieur de l'habitacle. En effet, en cas de perturbations radiofréquences, le système peut considérer qu'un badge, laissé dans le véhicule, n'est pas présent, et autoriser la condamnation des ouvrants. L'utilisateur qui se trouve à l'extérieur de son véhicule se voit alors dans l'impossibilité d'accéder à nouveau à son véhicule.

En outre, les solutions de secours connues sont généralement de type mécanique, consistant en l'emploi d'un insert de clé adapté pour être inséré dans un verrou commandant mécaniquement la serrure d'au moins un ouvrant. On se reportera par exemple à la demande de brevet au nom de la Demanderesse N° EP 0 987 389 décrivant un identifiant du format d'une carte de crédit équipé d'un tel insert.

L'inconvénient principal réside dans le fait que l'insert peut être perdu, rendant alors impossible l'utilisation de la solution de secours. On connaît bien entendu des solutions rendant l'insert complètement solidaire du badge (par exemple des inserts pivotants), mais ces solutions sont plus complexes à mettre en oeuvre. En outre, il faut prévoir obligatoirement un verrou mécanique au niveau de chacun des ouvrants. Enfin, même si plusieurs ouvrants disposent d'un verrou mécanique susceptible d'être actionné par l'insert, on ne peut procéder à la condamnation ou à la décondamnation que d'un seul ouvrant à la fois.

On connaît du document US 6384710 un système de télécommande pour l'accès à un véhicule automobile dans lequel les signaux de commande sont systématiquement transmis de façon redondante à une première et à une deuxième fréquences, pour pallier au problème d'éventuelles interférences à l'une ou à l'autre des deux fréquences.

La présente invention a pour but de proposer un autre type de solution de secours qui puisse prendre le relais par rapport à une solution qui utilise la transmission d'au moins un signal à une fréquence déterminée lorsque cette fréquence est soumise à des perturbations dans une zone donnée.

Plus précisément, la présente invention a pour objet un procédé de commande d'un système d'accès et/ou de démarrage d'un véhicule automobile tel que défini dans la revendication 1.

De manière préférentielle, l'étape de détection de signaux perturbateurs est déclenchée par une étape préalable de détection que le véhicule automobile est passé d'un état de fonctionnement à un état d'arrêt, par exemple en détectant qu'un signal de mise sous contact, présent lorsque le véhicule est démarré, a disparu.

Le procédé peut également comporter une étape de détection que le véhicule automobile est passé à nouveau à un état de fonctionnement, déclenchant alors la commutation dudit système sur son fonctionnement normal dans la première plage de fréquences.

Dans une première variante du procédé selon l'invention, l'étape de détection de signaux de fréquences perturbateurs est réalisée au niveau du véhicule, notamment au niveau de l'équipement: le procédé comporte alors une étape d'émission d'un message du véhicule vers le dispositif portatif, ce message indiquant au dispositif portatif qu'il doit fonctionner dans le mode de fonctionnement de secours.

En variante, l'étape de détection de signaux de fréquences perturbateurs est réalisée au niveau du dispositif portatif ; le procédé comporte alors, en cas de détection d'arrêt du véhicule, une étape d'émission d'un message du véhicule vers le dispositif portatif indiquant au dispositif portatif qu'il doit déclencher l'étape de détection de signaux perturbateurs.

Avantageusement, le procédé de commande peut comporter une étape d'alerte, visuelle et/ou sonore, destinée à prévenir l'utilisateur que le système commute sur un fonctionnement de secours. L'avantage de cette alerte est que l'utilisateur est informé du fait que son système d'accès et/ou de démarrage ne subit aucun dysfonctionnement qui lui est propre, mais est l'objet de perturbations extérieures.

La première plage de fréquences considérée peut être située en radiofréquences. La seconde plage de fréquences est alors située soit dans les basses fréquences, soit dans les fréquences infra-rouges.

La présente invention a également pour objet un système d'accès et/ou de démarrage d'un véhicule automobile tel que défini dans la revendication 11.

L'invention ainsi que les avantages qu'elle procure seront mieux compris au vu de la description suivante faite en référence aux figures annexées dans lesquelles :
- la figure 1 illustre schématiquement les composantes principales d'un système de sécurisation de l'accès et/ou du démarrage d'un véhicule automobile ;
- la figure 2 représente les différentes étapes possibles d'un mode préféré du procédé selon l'invention ;
- la figure 3a illustre une première variante possible d'une partie du procédé selon l'invention;
- la figure 3b illustre une deuxième variante possible d'une partie du procédé selon l'invention ;
- la figure 4 représente un synoptique simplifié d'un système d'accès à télécommande RF avec un mode de secours de type infra-rouge ;
- la figure 5 représente un synoptique simplifié d'un système d'accès et de démarrage mains-libres avec un mode de secours à basse fréquence ;

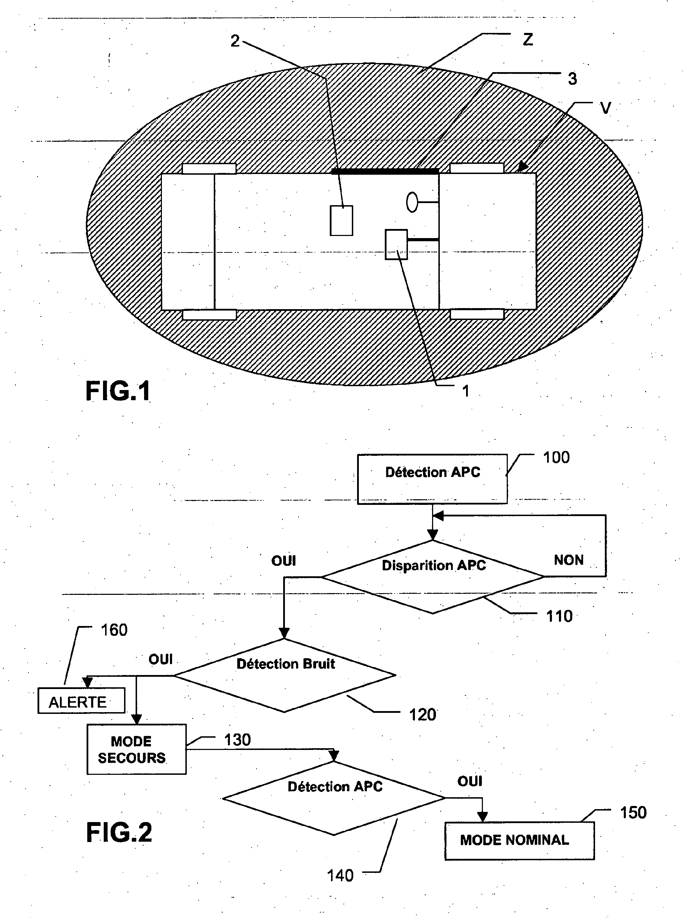

Sur la figure 1, on a représenté schématiquement un véhicule automobile V équipé d'un système d'accès et/ou de démarrage comprenant un équipement 1 monté à bord du véhicule et adapté pour l'échange de signaux électromagnétiques avec un dispositif portatif 2 dans une zone Z prédéfinie.

Le système est par exemple un système de télécommande, permettant uniquement de sécuriser l'accès au véhicule automobile (condamnation et décondamnation des ouvrants 3 du véhicule), le dispositif portatif 2 étant alors une télécommande générant, sur action de l'utilisateur (du type appui sur un bouton) un signal radiofréquence, et l'équipement 1 sur le véhicule comprenant un récepteur radiofréquence (non représenté), comprenant notamment une antenne de réception radiofréquence.

En variante, le système est de type mains-libres permettant de sécuriser l'accès et/ou le démarrage du véhicule V. Dans ce cas, le dispositif portatif 2 est un identifiant et l'équipement 1 à bord du véhicule est un équipement d'identification chargé d'authentifier l'identifiant préalablement à une quelconque autorisation. Plus précisément dans ce cas, l'identifiant génère, sur réception d'un signal d'interrogation émis par l'équipement 1, au moins un signal de réponse radiofréquence contenant un code d'identification. La communication de l'équipement d'identification 1 vers le badge 2 s'effectue soit à basses fréquences, typiquement à 125 KHz, soit également en radiofréquences.

Dans tous les cas précédents, le système d'accès et/ou de démarrage concerné par l'invention contient, au moins dans une direction (à savoir ici du dispositif portatif vers l'équipement), l'émission de signaux radiofréquences, la fréquence généralement utilisée étant typiquement égale à 433 MHz (on utilise également les fréquences 315/868 MHz).

Comme cela a été mentionné dans l'introduction, ce type de système d'accès et/ou de démarrage peut voir son fonctionnement troublé si le véhicule est stationné dans une zone géographique dans laquelle des signaux perturbateurs, indépendants du système, sont émis, que cela soit de façon involontaire ou non. Ces signaux sont perturbateurs dès lors qu'ils sont émis à une fréquence comprise dans une première plage de fréquences à laquelle appartient la fréquence utilisée dans le système pour la communication (unidirectionnelle ou bidirectionnelle) entre le dispositif portatif 2 et l'equipement 1. Plus précisément, la présence de tels signaux perturbateurs peut être responsable d'une non détection par l'équipement 1 situé sur le véhicule de signaux utiles, à savoir notamment d'un signal de commande émis d'une télécommande, ou d'un signal de réponse contenant un code d'identification dans le cas d'u système mains-libres.

Pour résoudre ce problème, le procédé de commande du système selon l'invention comporte une étape de détection de ces signaux de fréquences perturbateurs, suivie, en cas de détection positive, d'une étape de commutation du système sur un mode de fonctionnement de secours dans lequel le dispositif portatif va pouvoir communiquer avec l'équipement en utilisant des fréquences non perturbées.

Bien que la détection de signaux perturbateurs puisse être effectuée en théorie de façon permanente, ou cycliquement, on recherchera en pratique des solutions économiques en terme de consommation d'énergie, de sorte qu'il convient de déterminer le moment optimum pour déclencher effectivement l'étape de détection des signaux perturbateurs. Selon un mode de réalisation préférentiel de l'invention, on considère que le meilleur moment est celui où l'utilisateur vient de se garer et arrête le moteur de son véhicule. En effet, dans ce cas, l'utilisateur est encore dans son véhicule, et les actions ultérieures les plus probables qu'il est susceptible de faire sont, en fonction des capacités de son système :
- soit de redémarrer son véhicule ;
- soit de sortir de son véhicule et télécommander ou provoquer par son éloignement la condamnation automatique des ouvrants, puis revenir vers son véhicule pour l'ouvrir à nouveau.

En conséquence, selon un mode préféré du procédé selon l'invention, l'étape de détection signaux perturbateurs est déclenchée suite à la réception d'une indication que le véhicule automobile V est passé d'un état de fonctionnement à un état d'arrêt. Un signal connu généralement présent au niveau du véhicule automobile et utilisé à d'autres fins, éventuellement par d'autres dispositifs équipant le véhicule, est le signal dit « APC » existant après la mise sous contact du véhicule automobile. Un tel signal peut être utilisé pour le déclenchement des moyens de détection. Plus précisément, et comme schématisé sur la figure 2, une fois que le signal APC a été détecté (étape 100), et tant que la disparition de ce signal n'a pas été constatée, l'étape 120 de détection de signaux perturbateurs n'est pas initiée. En revanche, dès que la disparition du signal APC est détectée (étape 110), l'étape de détection 120 est déclenchée. Si aucun signal perturbateur n'est détecté, rien ne se passe et l'utilisateur pourra normalement utiliser son système de commande. Si au contraire un signal de bruit est détecté, on commande automatiquement (étape 130) la commutation du système sur un mode de fonctionnement de secours.

En variante ou en combinaison, on peut prévoir que l'étape de détection 120 soit déclenchée suite à une indication, disponible par ailleurs, qu'un ouvrant a été ouvert puis fermé. Dans ce cas, on peut se trouver dans une situation où l'utilisateur vient de rentrer dans son véhicule et va vouloir le démarrer, ou bien dans une situation dans laquelle l'utilisateur vient de sortir de son véhicule et va vouloir le condamner, puis le décondamner à un moment ultérieur.

De façon préférentielle, il est souhaitable de prévoir que le système puisse revenir dans son mode de fonctionnement nominal à un moment ou un autre. Dans la solution préférentielle, on considère que cela peut être fait dès lors que le véhicule quitte la zone dans laquelle on a détecté des signaux perturbateurs. Aussi, comme illustré sur la figure 2, le procédé selon l'invention peut comporter une étape 140 de détection que le véhicule est à nouveau passé à un état de fonctionnement (par exemple par détection de présence du signal APC), suivie d'une étape 150 de commutation du système à son mode de fonctionnement nominal.

Selon une autre caractéristique supplémentaire possible, il peut être souhaitable d'alerter l'utilisateur que son système vient d'être commuté en mode de secours. Dans la représentation de la figure 2, le procédé comporte une telle étape d'alerte 160. Cette alerte peut être visuelle et/ou sonore, et peut être effectuée au niveau du véhicule, par exemple de l'équipement 1, et/ou du dispositif portatif 2. Il peut être également avantageux de mémoriser cette alerte, au niveau du véhicule et/ou du dispositif portatif 2, de manière à la faire fonctionner à nouveau à un instant différé. Cela est particulièrement intéressant si l'utilisateur laisse son véhicule inutilisé pendant un long moment. Cette alerte est surtout avantageuse lorsque la solution de secours du système nécessite une action ou comportement particuliers de l'utilisateur, comme il sera décrit par la suite en référence à différents types non limitatifs de systèmes permettant la mise en oeuvre du procédé selon l'invention. En effet, cela permet à l'utilisateur d'utiliser sans perdre de temps sa solution de secours. En outre, cela permet d'éviter que l'utilisateur ait l'impression que son système d'accès et/ou de démarrage est en panne.

La détection proprement dite des signaux perturbateurs dans la première plage de fréquences (correspondant au mode de fonctionnement nominal du système) peut être réalisée soit au niveau du véhicule, par exemple au niveau de l'équipement 1, soit au niveau du dispositif portatif 2.

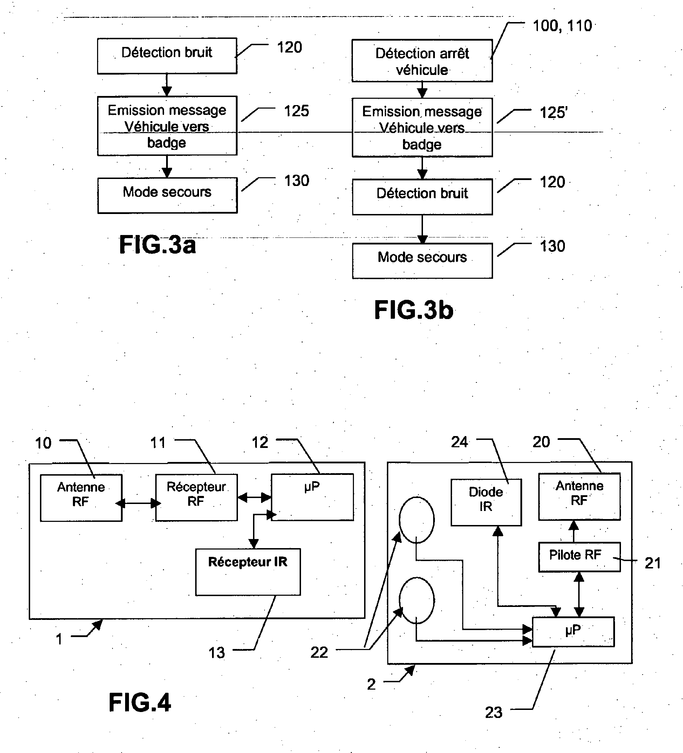

Dans le premier cas, comme schématisé par le synoptique de fonctionnement de la figure 3a, le procédé comporte de préférence, suite à une détection de bruit 120, une étape 125 d'émission d'un message du véhicule (par exemple de l'équipement 1) vers le dispositif portatif 2 pour indiquer à ce dernier qu'il doit dorénavant fonctionner selon le mode de secours.

Dans le second cas, comme schématisé par le synoptique de fonctionnement de la figure 3b, le procédé comporte également une étape d'émission d'un message du véhicule (par exemple de l'équipement 1) vers le dispositif portatif 2, mais cette étape 125' a pour but d'indiquer au dispositif portatif 2 qu'il doit initier l'étape de détection des signaux perturbateurs 120, et, en cas de perturbation, commuter lors de l'étape 120 en mode de secours. Comme illustré sur la figure 3b, cette étape 125' est déclenchée de préférence par la détection de l'arrêt du véhicule V.

Par ailleurs, la détection de ces signaux perturbateurs peut être une détection dite active, en ce sens qu'il est prévu effectivement de détecter ces signaux.

En variante, on peut considérer le cas d'une détection dite passive, en ce sens que le système, de par un comportement inattendu de l'un de ses constituants, déduit de lui-même qu'il est probablement dans une zone de perturbation. C'est le cas notamment lorsque le système est un système d'accès mains-libres dans lequel l'équipement 1 envoie une interrogation, par exemple à basse fréquence, au dispositif portatif 2 suite à une action de l'utilisateur, le dispositif portatif devant normalement répondre en radiofréquence pour donner son identification. Si l'équipement ne reçoit aucune réponse, il peut alors déduire (en partant de l'hypothèse qu'il ne s'agit pas d'une personne non détentrice d'un badge) que le dispositif portatif émet bien une réponse, mais que cette dernière ne peut être reçue en raison de perturbations.

C'est aussi le cas dans un système dans lequel une interrogation cyclique basse fréquence de l'équipement 1 vers le dispositif portatif 2 est initiée suite à l'arrêt du moteur dans le cadre d'une condamnation automatique sur éloignement de l'utilisateur. En partant en effet du principe que l'utilisateur va mettre un certain temps pour sortir puis s'éloigner de son véhicule, ce dernier devrait recevoir des messages de réponse radiofréquence en provenance du dispositif portatif 2. Si tel n'est pas le cas, l'équipement 1 peut très bien en conclure qu'il s'agit-là d'un comportement anormal, traduisant la présence de perturbations en radiofréquences.

On va maintenant décrire, à titre non limitatif, différents systèmes d'accès et/ou de démarrage permettant de mettre en oeuvre le procédé précédemment décrit.

D'une manière générale, un système conforme à la présente invention doit comporter:
- des moyens de détection de signaux de fréquences émis indépendamment du système de commande et perturbateurs pour ladite plage de fréquences ;
- des moyens de fonctionnement de secours adaptés pour que le dispositif portatif puisse communiquer avec l'équipement par des signaux à une fréquence comprise dans une seconde plage de fréquences prédéterminée, distincte de la première, et non perturbée par les signaux détectés, et
- des moyens de commutation du système sur le fonctionnement de secours lorsque des signaux perturbateurs dans la première plage de fréquence ont été détectés.

Dans la suite, on va considérer, à titre purement illustratif, que la première plage de fréquences est située dans les radiofréquences, de sorte que l'on s'intéresse à la détection de perturbations radiofréquences, et la seconde plage de fréquence utilisée pour le mode de secours est de préférence choisie dans une plage basses fréquences, par exemple autour de 125 KHz, ou dans une plage de fréquences infra-rouges.

Le premier système que l'on va décrire en référence à la figure 4 est un système de sécurisation de l'accès au véhicule automobile, dans lequel le mode de fonctionnement nominal est celui d'une télécommande radiofréquence, et le mode de fonctionnement de secours est de type infra-rouge.

Pour le fonctionnement nominal, le dispositif portatif 2 (ici une télécommande RF) comporte classiquement des moyens d'émission RF constitués d'une antenne d'émission 20 pilotée par un émetteur RF 21, et un ou plusieurs boutons de commande 22 reliés à un module de contrôle 23 comprenant un microprocesseur. Lorsque l'utilisateur souhaite décondamner ou condamner un ou plusieurs ouvrants, il appuie sur le bouton de commande 22 correspondant. Le module de contrôle gère alors les moyens d'émission 20, 21 pour qu'une trame RF soit générée et émise au niveau de l'antenne d'émission RF 20. Côté véhicule, l'équipement 1 comporte classiquement des moyens de réception pour recevoir et traiter cette trame RF. Ces moyens sont ici illustrés par une antenne de réception RF 10 reliée à un récepteur RF 11, l'ensemble étant commandé par un module de contrôle 12 comportant un microprocesseur. Un code d'identification reçu par l'antenne RF est extrait de la trame, et la décondamnation ou la condamnation des ouvrants est autorisée en cas d'authentification.

Le système selon la présente invention doit également comporter des moyens de détection des signaux perturbateurs susceptibles d'être présents dans la zone de fonctionnement. Ces signaux radiofréquences perturbateurs constituent en fait des signaux de bruit qu'il est possible de détecter en utilisant le contrôle automatique de gain utilisé classiquement dans un récepteur radiofréquences pour régler la sensibilité des moyens de réception, c'est-à-dire le gain de réception en fonction de l'amplitude des signaux reçus. Plus précisément, les moyens de détection selon l'invention comportent des moyens de réception comprenant une antenne de réception radiofréquence reliée à un pilote d'antenne. Le pilote d'antenne comporte des moyens de contrôle automatique de gain qui génèrent un signal de détection de signaux considérés comme perturbateurs dès lors que le gain du récepteur descend en dessous d'un seuil prédéterminé, preuve que dans ce cas, le récepteur a diminué sa sensibilité en raison de présence de bruit.

Une deuxième façon de détecter les signaux radiofréquences perturbateurs consiste à considérer que de tels signaux vont générer, en sortie de l'étage de réception radiofréquence et après numérisation, un nombre de fronts montants sur une fenêtre temporelle prédéterminée supérieur au nombre de fronts montants qui serait comptabilisé dans le cas de la réception d'un signal utile. Un deuxième mode de réalisation selon l'invention consiste donc à prévoir, un module de traitement de signal chargé de comptabiliser le nombre de fronts montants reçus sur une fenêtre temporelle donnée, et de délivrer un signal de détection d'un signal perturbateur si ce nombre est supérieur à une valeur seuil prédéterminée.

Il est clair que dans l'implémentation des différents moyens constitutifs de l'invention, on cherchera de préférence à optimiser le nombre de composants utilisés. Ainsi, dans un mode de réalisation préférentiel du système à télécommande représenté sur la figure 4, l'antenne de réception 10 prévue sur l'équipement 1, et par voie de conséquence le récepteur 11 relié à l'antenne et le microprocesseur 12 chargé de contrôler le fonctionnement de ce pilote pourront être également utilisés pour faire la détection des perturbations. Dans ce cas, il faut également prévoir, au niveau du véhicule V, par exemple de l'équipement 1, des moyens (non représentés) d'émission d'un message particulier, en utilisant par exemple la basse fréquence non perturbée, pour indiquer à la télécommande 2 qu'elle doit passer en mode de fonctionnement de secours. Le signal de détection reçu par le microprocesseur 12 permet à ce dernier de piloter les moyens d'émission du message. La télécommande doit également être munie de moyens de réception de ce type de message (non représentés).

En variante, on peut prévoir que les moyens de détection de signaux -perturbateurs soient situés au niveau de la télécommande 2. On peut prévoir dans ce cas que l'antenne 20 soit une antenne d'émission/réception, et que le module 21 soit un module d'émission/réception de signaux RF.

Bien entendu, tout autre type d'architecture, prévoyant notamment d'utiliser des composants distincts et supplémentaires par rapport à ceux nécessaires au fonctionnement classique du système d'accès, entre dans le cadre de la présente invention.

Lorsque des signaux perturbateurs ont été détectés, le système sait qu'il doit passer en mode de secours. Pour ce mode de fonctionnement de secours, il est prévu, du côté de la télécommande 2, des moyens d'émission infra-rouge 24, par exemple une diode électroluminescente, et du côté véhicule, un récepteur infra-rouge 13. Dans l'architecture particulièrement intéressante illustrée sur la figure 4, les moyens d'émission infra-rouge 24 sont contrôlés par le module de contrôle 23 et déclenchés sur actionnement des boutons 22 de la télécommande. Plus précisément, lorsque l'utilisateur appuie sur l'un des boutons 22 alors que le système est dans son mode de secours, le module de contrôle 23 va commander la diode infra-rouge pour qu'elle émette une trame infra-rouge de la même façon que ce module de contrôle 23 commande les moyens d'émission RF 20 et 21 lorsque le système est dans son mode de fonctionnement nominal. Ainsi, les trames infra-rouges émises ont exactement le même format que les trames RF émises par la télécommande 2. Du côté du véhicule, le récepteur infra-rouge 13 peut ainsi être relié au même microprocesseur 12 qui ne fait aucune différence, du point de vue du traitement, entre le fait qu'il reçoit une trame infra-rouge ou une trame radiofréquence. Le récepteur infra-rouge 13 peut être placé à différents emplacements au niveau du véhicule, par exemple contre un ouvrant, ou au niveau du rétroviseur intérieur.

Dans l'architecture présentée, les moyens de commutation du système dans son mode de fonctionnement de secours sont constitués essentiellement du module de contrôle 23 qui reçoit une indication que la zone est perturbée.

Du fait de l'utilisation de l'infra-rouge, il est nécessaire pour l'utilisateur d'orienter correctement sa télécommande 2 en direction du récepteur infra-rouge 13, voire de la placer très proche de ce récepteur. Dans ce cas, il est très avantageux de prévoir également des moyens d'alerte (non représentés) à destination de l'utilisateur lorsque de tels signaux perturbateurs ont été détectés. Ainsi, l'utilisateur est averti du fait que son véhicule est stationné dans une zone géographique dans laquelle son système de commande fonctionne en mode de secours. Les moyens d'alerte peuvent consister en tout dispositif permettant la génération d'un signal visuel, tel qu'un signal lumineux généré par une diode électroluminescente, ou encore un écran à cristaux liquides sur lequel un message spécifique peut s'inscrire. En variante ou en combinaison, il est possible d'utiliser une alerte sonore, voire une vibration sonore. Ces moyens d'alerte peuvent être situés sur la télécommande 2 ou au niveau du véhicule. Enfin, on peut prévoir également des moyens de mémorisation (non représentés) du signal d'alerte, permettant de rappeler ultérieurement à l'utilisateur que sa voiture est dans une zone perturbée.

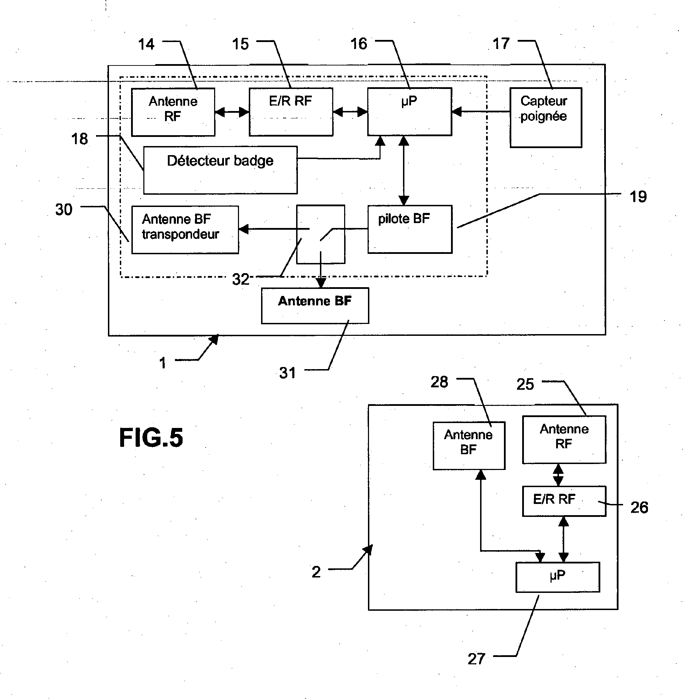

En référence à la figure 5, on va à présent décrire une architecture possible d'un système de sécurisation de l'accès et/ou du démarrage de type mains-libres comprenant, conformément à l'invention, une solution automatique de secours :
Dans ce système, on va décrire tout d'abord les moyens constitutifs du système qui permettent le fonctionnement nominal d'une part, pour l'accès, et d'autre part, pour le démarrage :
En ce qui concerne tout d'abord l'accès, le système considéré est du type dans lequel une communication bidirectionnelle en radiofréquence est établie entre l'équipement 1 et le dispositif portatif ou badge 2. Plus précisément, l'équipement 1 va initier le dialogue en envoyant un signal d'interrogation en radiofréquence et le badge va répondre à ce signal en envoyant un signal de réponse également en radiofréquence. Pour ce faire, l'équipement 1 comporte des moyens d'émission/réception RF constitués notamment d'une antenne d'émission/réception RF 14 reliée à un émetteur/récepteur RF 15, le tout étant contrôlé par un module de contrôle 16 comprenant un microprocesseur. Le badge 2 dispose de son côté de moyens de réception/émisston RF comportant une antenne de réception/émission RF 25 reliée à un récepteur/émetteur RF 26, le tout étant contrôlé par un module de contrôle 27 comprenant un microprocesseur. Le dialogue entre l'équipement 1 et le badge 2 pour l'accès est initié dans l'exemple de la figure 5 par le contact ou l'approche de la main de l'utilisateur sur un capteur 17, disposé par exemple au niveau de la poignée de l'ouvrant, lequel capteur délivre alors un signal au module de contrôle 16. Si le signal de réponse est authentifié, alors l'équipement 1, par exemple le module de contrôle 16, va autoriser la décondamnation de l'ouvrant.

En ce qui concerne la sécurisation du démarrage, l'équipement 1 comporte un lecteur de badge situé à l'intérieur du véhicule, ce lecteur regroupant par exemple les éléments compris dans le cadre en traits pointillés sur la figure 5. Le badge 2 est destiné à être inséré dans le lecteur de badge. Un détecteur de présence 18, par exemple sous la forme d'un commutateur électromécanique, envoie un signal au module de contrôle 16 qui initie alors un échange de données entre l'équipement 1 et le badge 2. Cet échange est réalisé, dans cet exemple de réalisation, en basse fréquence, typiquement à 125 KHz. Plus précisément, le module de contrôle 16, par l'intermédiaire d'un pilote d'antenne 19, alimente une antenne d'émission basse fréquence 30. Cette antenne se comporte comme le primaire d'un transformateur dont le secondaire est constitué par une antenne basse fréquence 28 située sur le badge 2. L'antenne BF 28 est donc chargée en énergie par l'antenne BF 30 du lecteur, et envoie une réponse à cette même antenne, cette réponse contenant une identification. En cas d'authentification, par exemple au niveau du module de contrôle 16, un signal autorisant le démarrage est envoyé.

Enfin, on peut prévoir également que le système soit doté de la fonctionnalité permettant une condamnation automatique des ouvrants sur l'éloignement du badge. Dans ce cas, suite par exemple à l'arrêt du moteur du véhicule, et éventuellement à la détection de l'ouverture puis de la fermeture de l'ouvrant du conducteur par des moyens prévus par ailleurs (non représentés), le module de contrôle 16 peut commander l'émission, éventuellement cyclique, d'un signal d'interrogation RF via l'antenne 14 et l'émetteur 15, et détecter la disparition du badge sur l'absence de réception de signaux de réponse.

Dans un tel système, si le véhicule est dans une zone de perturbations radiofréquences, l'accès par le mode nominal précédent risque d'être impossible, soit parce que le badge 2 ne reçoit pas le signal d'interrogation RF émis par l'équipement 1, soit parce que l'équipement 1 ne reçoit pas le signal de réponse émis en radiofréquence par le badge 2. De même, la condamnation automatique des ouvrants sur éloignement du badge risque de ne pas être effective.

La détection des perturbations peut être effectuée activement, comme cela a déjà été décrit précédemment, en utilisant le contrôle automatique de gain des moyens d'émission ou en comptant le nombre de fronts reçus sur un intervalle de temps prédéterminé, soit au niveau de l'équipement 1, soit au niveau du badge 2. Dans le premier cas (détection au niveau du véhicule), on utilise de préférence l'antenne 14 et le récepteur 15 déjà prévus sur l'équipement pour réaliser cette détection. Cette détection peut être initiée lorsque l'on arrête le moteur du véhicule. Le badge étant alors encore dans le lecteur, on peut se servir avantageusement des antennes BF 30 et 28 situées respectivement dans le lecteur et sur le badge pour envoyer au badge un message dédié lui indiquant qu'il faut passer en mode de fonctionnement secours lorsqu'une perturbation a été détectée. Dans le second cas (détection au niveau du badge), on utilise de préférence l'antenne 25 et le récepteur 26 déjà prévus sur le badge pour réaliser cette détection.

En variante, la détection des perturbations peut être effectuée de manière passive, le système déduisant de lui-même, sur un fonctionnement anormal, qu'il est dans une zone perturbée. Par exemple, si le module de contrôle 16 de l'équipement 1 ne reçoit aucun signal de réponse alors qu'il a émis des signaux d'interrogation, on peut considérer que les signaux radiofréquences ont bien été émis, mais n'ont pas été reçus du fait de perturbations radiofréquences. Le module de contrôle 16 peut alors commander la génération d'un message à l'attention du badge, par exemple en basse fréquence, pour lui indiquer que le système commute en mode de fonctionnement de secours. L'équipement 1 et/ou le badge 2 peuvent également comporter des moyens d'alerte (non représentés) à l'attention de l'utilisateur.

Pour le fonctionnement en mode de secours, on prévoit une antenne basse fréquence supplémentaire 31 au niveau de l'équipement 1. Cette antenne 31 doit être située à un endroit accessible à l'utilisateur lorsque ce dernier souhaite décondamner les ouvrants. Par exemple, l'antenne BF 31 peut être localisée au niveau de la poignée de l'ouvrant, ou au niveau d'un verrou (ou faux-verrou) de la poignée, ou encore sur le pare-brise ou le rétroviseur extérieur du véhicule. Cette antenne 31 est reliée au lecteur. Lorsque l'utilisateur souhaite accéder au véhicule en mode de secours, il doit approcher son badge du véhicule de manière à placer l'antenne BF 28 du badge regard de l'antenne BF 31. De manière avantageuse, cette antenne 31 est pilotée par le même pilote d'antenne 19 qui pilote l'antenne BF 30 utilisée dans le lecteur pour le démarrage. Des moyens de commutation 32 situés entre d'une part, le pilote BF 19, et d'autre part, soit l'antenne BF 30, soit l'antenne BF 31 permettent de sélectionner l'antenne qui doit effectivement être alimentée. Plus précisément, si les moyens 18 de sélection de présence de badge détectent effectivement la présence d'un badge dans le lecteur, à savoir en regard de l'antenne BF 30, c'est cette antenne 30 qui est alimentée car il ne s'agit pas alors d'une situation d'accès (l'utilisateur est déjà dans le véhicule). Si au contraire aucun badge n'est détecté dans le lecteur, c'est l'antenne BF 31 qui est alimentée. L'alimentation de cette antenne peut être également conditionnée au fait que le module de contrôle 16 reçoit un signal de détection en provenance du capteur 17, traduisant le fait qu'un utilisateur veut ouvrir la porte.

Les deux exemples décrits précédemment en référence aux figures 4 et 5 ne sont nullement limitatifs, et d'autres architectures sont évidemment possibles sans départir de la présente invention.

Notamment, on peut prévoir qu'un système d'accès à télécommandé RF pour le fonctionnement nominal commute dans un mode de secours qui soit selon un mode transpondeur basse fréquence comme celui décrit à la figure 5.

En outre, le mode transpondeur de la figure 5 peut être remplacé également par un mode de communication basse fréquence à plus grande distance entre deux antennes basses fréquences correctement localisées, d'une part sur le badge, et d'autre part sur le véhicule. Cette solution est intéressante du fait que la commutation du système entre son mode de fonctionnement nominal et son mode de fonctionnement de secours pourrait se faire de façon complètement transparente pour l'utilisateur, ce dernier n'ayant pas à faire d'action particulière.

De même, on doit comprendre que l'équipement 1 à bord du véhicule n'est pas forcément un dispositif unique, mais peut être composé de différents modules reliés entre eux, et placés à des emplacements différents.

Par ailleurs, bien que l'on ait présenté des solutions préférentielles dans lesquelles on a tenté de réduire au maximum le nombre de composants utilisés (notamment en utilisant des antennes communes), d'autres solutions sont envisageables.

Enfin, bien que les différents systèmes aient été décrits dans le cadre de perturbations radiofréquences, l'invention peut bien entendu être étendue à d'autres types de perturbations.

## Revendications

1. Procédé de commande d'un système d'accès et/ou de démarrage d'un véhicule automobile (V) du type comportant un dispositif portatif (2) adapté pour communiquer avec un équipement (1) situé au niveau du véhicule automobile (V) par des signaux à au moins une première fréquence comprise dans au moins une première plage de fréquences prédéterminée et à une seconde fréquence comprise dans une seconde plage de fréquences prédéterminée et distincte de la première plage de fréquences, en vue d'autoriser ou empêcher l'accès et/ou le démarrage, **caractérisé en ce qu'**il comporte les étapes suivantes :
- détection par le dispositif portatif (2) ou par l'équipement (1) de la présence de signaux de fréquences émis indépendamment du système d'accès et/ou de démarrage et perturbateurs pour ladite première plage de fréquences ;
- en cas de détection, commutation automatique (130) du système depuis son mode de fonctionnement nominal à ladite première fréquence sur un mode de fonctionnement de secours dans lequel le dispositif portatif communique avec l'équipement par des signaux à ladite seconde fréquence ;
- commutation automatique (150) du système depuis son mode de fonctionnement de secours sur son mode de fonctionnement nominal dès que le véhicule automobile (V) quitte la zone dans laquelle la présence de signaux perturbateurs a été détectée.

2. Procédé de commande selon la revendication 1, **caractérisé en ce que** l'étape de détection (120) de signaux perturbateurs est déclenchée par une étape préalable (100, 110) de détection que le véhicule automobile (V) est passé d'un état de fonctionnement à un état d'arrêt.

3. Procédé de commande selon la revendication 2, **caractérisé en ce que** ladite étape préalable consiste en la détection qu'un signal de mise sous contact (APC) a disparu.

4. Procédé de commande selon l'une quelconque des revendications 2 ou 3, **caractérisé en ce qu'**il comporte en outre une étape de détection (140) que le véhicule automobile (V) est passé à nouveau à un état de fonctionnement, déclenchant alors la commutation automatique (150) dudit système sur son fonctionnement nominal dans la première plage de fréquences.

5. Procédé de commande selon l'une quelconque des revendications: précédentes, **caractérisé en ce que** l'étape (120) de détection de signaux de fréquences perturbateurs est réalisée au niveau du véhicule, notamment au niveau de l'équipement (1), et **en ce qu'**il comporte en outre une étape (125) d'émission d'un message du véhicule (V) vers le dispositif portatif (2) indiquant au dispositif portatif (2) qu'il doit alors fonctionner dans le mode de fonctionnement de secours.

6. Procédé de commande selon l'une quelconque des revendications 2 ou 3, **caractérisé en ce que** l'étape (120) de détection de signaux de fréquences perturbateurs est réalisée au niveau du dispositif portatif (2), et **en ce qu'**il comporte en outre, en cas de détection d'arrêt du véhicule (V), une étape (125') d'émission d'un message du véhicule (V) vers le dispositif portatif (2) indiquant au dispositif portatif (2) qu'il doit déclencher la détection de signaux perturbateurs.

7. Procédé de commande selon l'une quelconque des revendications précédentes, **caractérisé en ce qu'**il comporte en outre une étape d'alerte (160), visuelle et/ou sonore, destinée à prévenir l'utilisateur que le système commute sur un fonctionnement de secours.

8. Procédé de commande selon l'une quelconque des revendications précédentes, **caractérisé en ce que** la première plage de fréquences est radiofréquences.

9. Procédé de commande selon l'une quelconque des revendications précédentes, **caractérisé en ce que** la seconde plage de fréquences est située dans les basses fréquences.

10. Procédé de commande selon l'une quelconque des revendications 1 à 8, **caractérisé en ce que** la seconde plage de fréquences est située dans les fréquences infra-rouges.

11. Système d'accès et/ou de démarrage d'un véhicule automobile (V) du type comportant un dispositif portatif (2) adapté pour communiquer avec un équipement (1) situé au niveau du véhicule automobile (V) par des signaux à au moins une première fréquence comprise dans une première plage de fréquences prédéterminée, le système comportant en outre des moyens adaptés pour que le dispositif portatif puisse communiquer avec l'équipement à une seconde fréquence comprise dans une seconde plage de fréquences prédéterminée et distincte de la première, en vue d'autoriser ou empêcher l'accès et/ou le démarrage, **caractérisé en ce qu'**il comporte en outre des moyens (4-6 ; 4-6, 8) de détection par le dispositif (2) ou par l'équipement (1) de la présence de signaux de fréquences émis indépendamment du système d'accès et/ou de démarrage et perturbateurs pour ladite première plage de fréquences, et des moyens de commutation automatique du système depuis son mode de fonctionnement nominal à la première fréquence sur un mode de fonctionnement de secours à ladite seconde fréquence lorsque la présence de signaux perturbateurs dans la première plage de fréquence a été détectée, et de commutation automatique du système depuis son mode de fonctionnement de secours sur son mode de fonctionnement nominal dès que le véhicule automobile (V) quitte la zone dans laquelle la présence de signaux perturbateurs a été détectée.

12. Système selon la revendication 11, **caractérisé en ce que** les moyens de détection de la présence de signaux perturbateurs comportent des moyens de réception comprenant une antenne (10 ; 20 ; 14 ; 25) de réception radiofréquence reliée à un pilote d'antenne (11 ; 21 ; 15 ; 26), ledit pilote d'antenne comportant en outre des moyens de contrôle automatique de gain permettant de régler la sensibilité des moyens de réception, et délivrant un signal de détection de signaux perturbateurs lorsque le gain descend au-dessous d'un certain seuil prédéterminé.

13. Système selon la revendication 11, **caractérisé en ce que** les moyens de détection de la présence de signaux perturbateurs comportent des moyens de réception comprenant une antenne (10 ; 20 ; 14 ; 25) de réception radiofréquence reliée à un pilote d'antenne (11 ; 21 ; 15 ; 26), et un module de traitement de signal comptant le nombre de fronts montant reçus sur une fenêtre temporelle donnée, et délivrant un signal de détection de signaux perturbateurs lorsque le nombre compté est supérieur à un nombre seuil prédéterminé.

14. Système selon l'une quelconque des revendications 11 à 13, **caractérisé en ce que** le dispositif portatif (2) est une télécommande comprenant des moyens (20-23) générant, sur action de l'utilisateur, une trame en radiofréquence dans le mode de fonctionnement nominal, et **en ce que** l'équipement (1) situé au niveau du véhicule automobile (V) comprend une antenne (10) de réception radiofréquence reliée à un récepteur radiofréquence (11) contrôlé par un module de contrôle (12) de l'équipement.

15. Système selon les revendications 12 et 14 ou 13 et 14 prises en combinaison, **caractérisé en ce que** l'antenne de réception radiofréquence de l'équipement (1) est commune avec l'antenne (10) de réception des signaux radiofréquences perturbateurs.

16. Système selon l'une quelconque des revendications 11 à 15, **caractérisé en ce qu'**il comporte, pour le mode de fonctionnement de secours :
- au niveau du dispositif portatif (2), des moyens (23, 24) de génération d'une trame infra-rouge ;
- au niveau du véhicule (V), des moyens (12, 13) de réception et de traitement de la trame infra-rouge.

17. Système selon les revendications 14 et 16 prises en combinaison, **caractérisé en ce que** les moyens pour générer une trame radiofréquence comportent un bouton de commande (22) relié à un module de contrôle (23) contrôlant un émetteur radiofréquence (21) et une antenne d'émission radiofréquence (20), et **en ce que** les moyens de génération de la trame infra-rouge comportent une diode (24) reliée au même module de contrôle (23) de manière à générer, sur action dudit bouton de commande, la trame infra-rouge du même format que la trame radiofréquence.

18. Système selon les revendications 14 et 16 prises en combinaison, **caractérisé en ce que** les moyens de réception et de traitement de la trame infra-rouge au niveau du véhicule comportent un récepteur infra-rouge (13) relié audit module de contrôle (12) de l'équipement.

19. Système selon l'une quelconque des revendications 11 à 13, **caractérisé en ce que** le dispositif portatif (2) est un identifiant générant, dans le mode de fonctionnement nominal, sur réception d'un signal d'interrogation émis par l'équipement (1), au moins un signal de réponse radiofréquence contenant un code d'identification, l'accès au véhicule automobile et/ou le démarrage du véhicule automobile n'étant autorisé que si le code d'identification a été au préalable identifié.

20. Système selon la revendication 19, **caractérisé en ce qu'**il comporte :
- au niveau de l'identifiant (2) :
• une antenne d'émission/réception radiofréquence (25) reliée à un émetteur/récepteur (26), le tout étant piloté par un module de contrôle (27) de l'identifiant pour la réception du signal d'interrogation et l'émission du signal de réponse radiofréquence en mode de fonctionnement nominal ;
• une antenne base fréquence (28) pour la communication avec l'équipement (1) en mode de fonctionnement de secours ;
- au niveau de l'équipement (1) :
• une antenne d'émission/réception radiofréquence (14) reliée à un émetteur/récepteur (15), le tout étant piloté par un module de contrôle (16) de l'équipement pour l'émission du signal d'interrogation et la réception du signal de réponse radiofréquence en mode de fonctionnement nominal ;
• une antenne base fréquence (31) pour la communication avec l'identifiant (2) en mode de fonctionnement de secours.

21. Système selon la revendication 20, **caractérisé en ce que** l'antenne basse fréquence (28) de l'identifiant (2) est pilotée par le module de contrôle (27) de l'identifiant (2), lequel commute soit sur cette antenne basse fréquence, soit sur l'antenne d'émission /réception radiofréquence (25) en fonction du mode de fonctionnement du système.

22. Système selon l'une quelconque des revendications 20 ou 21, **caractérisé en ce que** l'antenne basse fréquence (31) de l'équipement (1) est alimentée par un pilote d'antenne (19) contrôlé par le module de contrôle (16) de l'équipement, et **en ce que** l'antenne basse fréquence (28) de l'identifiant est chargée en énergie par l'antenne basse fréquence (31) de l'équipement lorsque l'identifiant est mis en regard de cette antenne en mode de fonctionnement de secours.

23. Système selon l'une quelconque des revendications 20 à 22, **caractérisé en ce que** l'équipement (1) comporte en outre une seconde antenne basse fréquence (30) en regard de laquelle l'antenne basse fréquence (28) de l'identifiant (2) est susceptible d'être placée en vue de sécuriser le démarrage.

24. Système selon les revendications 22 et 23 prises en combinaison, **caractérisé en ce que** les deux antennes basse fréquence (30, 31) de l'équipement sont reliées alternativement au pilote d'antenne (19) par un moyen de sélection (32) en fonction du mode de fonctionnement du système.

25. Système selon la revendication 24, **caractérisé en ce que** l'équipement (1) comporte un lecteur comprenant notamment la seconde antenne basse fréquence (30) et des moyens (18) de détection de la présence de l'identifiant (2) dans le lecteur permettant la commande des moyens de sélection (18) sur l'une ou l'autre des antennes basse fréquence (31, 31) en fonction de la présence ou de l'absence de l'identifiant dans le lecteur.

## Patentansprüche

1. Verfahren zum Steuern eines Zugangs- und/oder Startsystems eines Kraftfahrzeugs (V) des Typs, der eine tragbare Vorrichtung (2) umfasst, die dafür ausgelegt ist, mit einer Anlage (1), die sich auf Seiten des Kraftfahrzeugs (V) befindet, über Signale mit wenigstens einer ersten Frequenz, die in wenigstens einem ersten vorgegebenen Frequenzbereich liegt, und mit einer zweiten Frequenz, die in einem zweiten vorgegebenen Frequenzbereich liegt, der von dem ersten Frequenzbereich verschieden ist, zu kommunizieren, um den Zugang und/oder das Starten zuzulassen oder zu verhindern, **dadurch gekennzeichnet, dass** es die folgenden Schritte umfasst:
- Detektieren durch die tragbare Vorrichtung (2) oder durch die Anlage (1) des Vorhandenseins von Signalen mit Frequenzen, die unabhängig von dem Zugangs- und/oder Startsystem ausgesendet werden und Störer für den ersten Frequenzbereich sind;
- im Fall einer Detektion automatisches Umschalten (130) des Systems von seiner Nennbetriebsart mit der ersten Frequenz zu einer Sicherheitsbetriebsart, in der die tragbare Vorrichtung mit der Anlage über Signale mit der zweiten Frequenz kommuniziert;
- automatisches Umschalten (150) des Systems von der Sicherheitsbetriebsart zu seiner Nennbetriebsart, sobald das Kraftfahrzeug (V) die Zone verlässt, in der das Vorhandensein von Störersignalen detektiert worden ist.

2. Steuerverfahren nach Anspruch 1, **dadurch gekennzeichnet, dass** der Schritt (120) des Detektierens von Störersignalen durch einen vorhergehenden Schritt (100, 110) des Detektierens, dass das Kraftfahrzeug (V) von einem Betriebszustand in einen Haltezustand übergegangen ist, ausgelöst wird.

3. Steuerverfahren nach Anspruch 2, **dadurch gekennzeichnet, dass** der vorhergehende Schritt darin besteht zu detektieren, dass ein Kontaktherstellungssignal (APC) verschwunden ist.

4. Steuerverfahren nach einem der Ansprüche 2 oder 3, **dadurch gekennzeichnet, dass** es außerdem einen Schritt (140) des Detektierens, dass das Kraftfahrzeug (V) erneut in einen Betriebszustand übergegangen ist, umfasst, wodurch das automatische Umschalten (150) des Systems in seinen Nennbetrieb in dem ersten Frequenzbereich ausgelöst wird.

5. Steuerverfahren nach einem der vorhergehenden Ansprüche, **dadurch gekennzeichnet, dass** der Schritt (120) des Detektierens von Signalen mit Störfrequenzen auf Seiten des Fahrzeugs, insbesondere auf Seiten der Anlage (1), ausgeführt wird und dass es außerdem einen Schritt (125) des Aussendens einer Nachricht von dem Fahrzeug (V) zu der tragbaren Vorrichtung (2), die der tragbaren Vorrichtung (2) meldet, dass sie ab sofort in der Sicherheitsbetriebsart arbeiten soll, umfasst.

6. Steuerverfahren nach einem der Ansprüche 2 oder 3, **dadurch gekennzeichnet, dass** der Schritt (120) des Detektierens von Signalen mit Störfrequenzen auf Seiten der tragbaren Vorrichtung (2) ausgeführt wird und dass es außerdem im Fall der Detektion des Haltens des Fahrzeugs (V) einen Schritt (125') des Aussendens einer Nachricht von dem Fahrzeug (V) zu der tragbaren Vorrichtung (2), die der tragbaren Vorrichtung (2) meldet, dass sie die Detektion von Störersignalen auslösen soll, umfasst.

7. Steuerverfahren nach einem der vorhergehenden Ansprüche, **dadurch gekennzeichnet, dass** es außerdem einen Schritt (160) des Ausgebens eines sichtbaren und/oder hörbaren Alarms umfasst, der dazu bestimmt ist, den Anwender zu warnen, dass das System in den Sicherheitsbetrieb umschaltet.

8. Steuerverfahren nach einem der vorhergehenden Ansprüche, **dadurch gekennzeichnet, dass** der erste Frequenzbereich Hochfrequenzen enthält.

9. Steuerverfahren nach einem der vorhergehenden Ansprüche, dass der zweite Frequenzbereich in den niedrigen Frequenzen liegt.

10. Steuerverfahren nach einem der Ansprüche 1 bis 8, **dadurch gekennzeichnet, dass** der zweite Frequenzbereich in den Infrarotfrequenzen liegt.

11. Zugangs- und/oder Startsystem für ein Kraftfahrzeug (V) des Typs, der eine tragbare Vorrichtung (2) umfasst, die dafür ausgelegt ist, mit einer Anlage (1), die sich auf Seiten des Kraftfahrzeugs (V) befindet, über Signale mit wenigstens einer ersten Frequenz, die in einem ersten vorgegebenen Frequenzbereich liegt, zu kommunizieren, wobei das System außerdem Mittel umfasst, die dafür ausgelegt sind, dass die tragbare Vorrichtung mit der Anlage auf einer zweiten Frequenz kommunizieren kann, die in einem zweiten vorgegebenen Frequenzbereich liegt, der von dem ersten Frequenzbereich verschieden ist, um den Zugang und/oder das Starten zuzulassen oder zu verhindern, **dadurch gekennzeichnet, dass** es außerdem Mittel (4-6; 4-6, 8) zum Detektieren durch die Vorrichtung (2) oder durch die Anlage (1) des Vorhandenseins von Signalen mit Frequenzen, die unabhängig von dem Zugangs- und/oder Startsystem ausgesendet werden und Störer für den ersten Frequenzbereich bilden, und Mittel zum automatischen Umschalten des Systems von seiner Nennbetriebsart mit der ersten Frequenz zu einer Sicherheitsbetriebsart mit der zweiten Frequenz, wenn das Vorhandensein von Störersignalen in dem ersten Frequenzbereich detektiert worden ist, und zum automatischen Umschalten des Systems von seiner Sicherheitsbetriebsart zu seiner Nennbetriebsart, sobald das Kraftfahrzeug (V) die Zone, in der das Vorhandensein von Störersignalen detektiert worden ist, verlassen hat, umfasst.

12. System nach Anspruch 11, **dadurch gekennzeichnet, dass** die Mittel zum Detektieren des Vorhandenseins von Störersignalen Empfangsmittel umfassen, die eine Hochfrequenzempfangsantenne (10; 20; 14; 25) umfasst, die mit einer Antennensteuerung (11; 21; 15; 26) verbunden ist, wobei die Antennensteuerung außerdem Mittel zum automatischen Steuern der Verstärkung umfasst, die ermöglichen, die Empfindlichkeit der Empfangsmittel zu regulieren, und ein Signal der Detektion von Störersignalen ausgibt, wenn die Verstärkung unter einen bestimmten, vorgegebenen Schwellenwert abfällt.

13. System nach Anspruch 11, **dadurch gekennzeichnet, dass** die Mittel zum Detektieren des Vorhandenseins von Störersignalen Empfangsmittel umfassen, die eine Hochfrequenzempfangsantenne (10; 20; 14; 25) enthalten, die mit einer Antennensteuerung (11; 21; 15; 26) verbunden ist, und ein Signalverarbeitungsmodul umfassen, das die Anzahl von Anstiegsflanken, die in einem gegebenen Zeitfenster empfangen werden, zählt und ein Signal für die Detektion von Störersignalen ausgibt, wenn die gezählte Anzahl größer als eine vorgegebene Schwellenanzahl ist.

14. System nach einem der Ansprüche 11 bis 13, **dadurch gekennzeichnet, dass** die tragbare Vorrichtung (2) eine Fernsteuerung ist, die Mittel (20-23) enthält, die bei Einwirkung des Anwenders einen Hochfrequenzrahmen in der Nennbetriebsart erzeugen, und dass die Anlage (1), die sich auf Seiten des Kraftfahrzeugs (V) befindet, eine Hochfrequenzempfangsantenne (10) enthält, die mit einem Hochfrequenzempfänger (11) verbunden ist, der durch ein Steuermodul (12) der Anlage gesteuert wird.

15. System nach den Ansprüchen 12 und 14 oder 13 und 14 in Kombination, **dadurch gekennzeichnet, dass** die Hochfrequenzempfangsantenne der Anlage (1) der Antenne (10) für den Empfang von hochfrequenten Störersignalen gemeinsam ist.

16. System nach einem der Ansprüche 11 bis 15, **dadurch gekennzeichnet, dass** es für die Sicherheitsbetriebsart Folgendes umfasst:
- auf Seiten der tragbaren Vorrichtung (2) Mittel (23, 24) für die Erzeugung eines Infrarotrahmens;
- auf Seiten des Fahrzeugs (V) Mittel (12, 13) für den Empfang und die Verarbeitung des Infrarotrahmens.

17. System nach den Ansprüchen 14 und 16 in Kombination, **dadurch gekennzeichnet, dass** die Mittel zum Erzeugen eines Hochfrequenzrahmens eine Steuertaste (22) enthalten, die mit einem Steuermodul (23) verbunden ist, das einen Hochfrequenzsender (21) und eine Hochfrequenzsendeantenne (20) steuert, und dass die Mittel zum Erzeugen des Infrarotrahmens eine Diode (24) enthalten, die mit demselben Steuermodul (23) verbunden ist, derart, dass bei Einwirkung auf die Steuertaste der Infrarotrahmen mit demselben Format wie der Hochfrequenzrahmen erzeugt wird.

18. System nach den Ansprüchen 14 und 16 in Kombination, **dadurch gekennzeichnet, dass** die Empfangs- und Verarbeitungsmittel des Infrarotrahmens auf Seiten des Fahrzeugs einen Infrarotempfänger (13) umfassen, der mit dem Steuermodul (12) der Anlage verbunden ist.

19. System nach einem der Ansprüche 11 bis 13, **dadurch gekennzeichnet, dass** die tragbare Vorrichtung (2) ein Identifizierer ist, der in der Nennbetriebsart bei Empfang eines Abfragesignals, das von der Anlage (1) ausgesendet wird, wenigstens ein Hochfrequenzantwortsignal erzeugt, das einen Identifizierungscode enthält, wobei der Zugang zu dem Kraftfahrzeug und/oder das Starten des Kraftfahrzeugs nur zugelassen wird, wenn der Identifizierungscode im Voraus identifiziert worden ist.

20. System nach Anspruch 19, **dadurch gekennzeichnet, dass** es Folgendes umfasst:
- auf Seiten des Identifizierers (2):
• eine Hochfrequenz-Sende/Empfangsantenne (25), die mit einem Sender/Empfänger (26) verbunden ist, wobei die Gesamtheit durch ein Steuermodul (27) des Identifizierers für den Empfang des Abfragesignals und das Aussenden des Hochfrequenzantwortsignals in der Nennbetriebsart gesteuert wird;
• eine Niederfrequenzantenne (28) für die Kommunikation mit der Anlage (1) in der Sicherheitsbetriebsart;
- auf Seiten der Anlage (1):
• eine Hochfrequenz-Sende/Empfangsantenne (14), die mit einem Sender/Empfänger (15) verbunden ist, wobei die Gesamtheit durch ein Steuermodul (16) der Anlage zum Aussenden des Abfragesignals und zum Empfangen des Hochfrequenzantwortsignals in der Nennbetriebsart gesteuert wird;
• eine Niederfrequenzantenne (31) für die Kommunikation mit dem Identifizierer (2) in der Sicherheitsbetriebsart.

21. System nach Anspruch 20, **dadurch gekennzeichnet, dass** die Niederfrequenzantenne (28) des Identifizierers (2) durch das Steuermodul (27) des Identifizierers (2) gesteuert wird, der als Funktion der Betriebsart des Systems entweder zu dieser Niederfrequenzantenne oder zu der Hochfrequenz-Sende/Empfangsantenne (25) umschaltet.

22. System nach einem der Ansprüche 20 oder 21, **dadurch gekennzeichnet, dass** die Niederfrequenzantenne (31) der Anlage (1) durch die Antennensteuerung (19) versorgt wird, die durch das Steuermodul (16) der Anlage gesteuert wird, und dass die Niederfrequenzantenne (28) des Identifizierers durch die Niederfrequenzantenne (31) der Anlage mit Energie versorgt wird, wenn der Identifizierer in der Sicherheitsbetriebsart gegenüber dieser Antenne angeordnet wird.

23. System nach einem der Ansprüche 20 bis 22, **dadurch gekennzeichnet, dass** die Anlage (1) außerdem eine zweite Niederfrequenzantenne (30) umfasst, gegenüber der die Niederfrequenzantenne (28) des Identifizierers (2) angeordnet werden kann, um das Starten sicherzustellen.

24. System nach den Ansprüchen 22 und 23 in Kombination, **dadurch gekennzeichnet, dass** die zwei Niederfrequenzantennen (30, 31) der Anlage durch ein Auswahlmittel (32) als Funktion der Betriebsart des Systems abwechselnd mit der Antennensteuerung (19) verbunden werden.

25. System nach Anspruch 24, **dadurch gekennzeichnet, dass** die Anlage (1) eine Leseeinrichtung umfasst, die insbesondere die zweite Niederfrequenzantenne (30) und die Mittel (18) zum Detektieren des Vorhandenseins des Identifizierers (2) in der Leseeinrichtung umfasst, was die Steuerung der Auswahlmittel (18) für die eine oder die andere der Niederfrequenzantennen (31, 31) als Funktion des Vorhandenseins oder Fehlens des Identifizierers in der Leseeinrichtung ermöglicht.

## Claims

1. Method of control of a system for accessing and/or starting an automotive vehicle (V) of the type comprising a handheld device (2) adapted to communicate with an item of equipment (1) situated at the level of the automotive vehicle (V) by signals at at least one first frequency included in at least one first predetermined frequency span and at a second frequency included in a second predetermined frequency span distinct from the first frequency span, with a view to permitting or preventing access and/or starting, **characterized in that** it comprises the following steps:
- detection by the handheld device (2) or by the item of equipment (1) of the presence of frequency signals which are emitted independently of the access and/or starting system and are disturbing in respect of the said first frequency span;
- in case of detection, automatic switching (130) of the system from its nominal mode of operation at the said first frequency to a backup mode of operation in which the handheld device communicates with the item of equipment by signals at the said second frequency;
- automatic switching (150) of the system from its backup mode of operation to its nominal mode of operation as soon as the automotive vehicle (V) quits the zone in which the presence of disturbing signals has been detected.

2. Method of control according to Claim 1, **characterized in that** the step (120) of detecting disturbing signals is triggered by a prior step (100, 110) of detecting that the automotive vehicle (V) has passed from an operating state to a stoppage state.

3. Method of control according to Claim 2, **characterized in that** the said prior step consists of detecting that a contacting signal (APC) has disappeared.

4. Method of control according to either one of Claims 2 or 3, **characterized in that** it furthermore comprises a step (140) of detecting that the automotive vehicle (V) has again passed to an operating state, so triggering the automatic switching (150) of the said system to nominal operation thereof in the first frequency span.

5. Method of control according to any one of the preceding claims, **characterized in that** the step (120) of detecting disturbing frequency signals is carried out at the level of the vehicle, in particular at the level of the item of equipment (1), and **in that** it furthermore comprises a step (125) of emitting a message from the vehicle (V) to the handheld device (2) indicating to the handheld device (2) that it must then operate in the backup mode of operation.

6. Method of control according to either one of Claims 2 or 3, **characterized in that** the step (120) of detecting disturbing frequency signals is carried out at the level of the handheld device (2), and **in that** it furthermore comprises, in case of detection of stoppage of the vehicle (V), a step (125') of emitting a message from the vehicle (V) to the handheld device (2) indicating to the handheld device (2) that it must trigger the detection of disturbing signals.

7. Method of control according to any one of the preceding claims, **characterized in that** it furthermore comprises a step (160) of visual and/or audible alert intended to forewarn the user that the system is switching to backup operation.

8. Method of control according to any one of the preceding claims, **characterized in that** the first frequency span is radiofrequencies.

9. Method of control according to any one of the preceding claims, **characterized in that** the second frequency span is situated in the low frequencies.

10. Method of control according to any one of Claims 1 to 8, **characterized in that** the second frequency span is situated in the infrared frequencies.

11. System for accessing and/or starting an automotive vehicle (V) of the type comprising a handheld device (2) adapted to communicate with an item of equipment (1) situated at the level of the automotive vehicle (V) by signals at at least one first frequency included in a first predetermined frequency span, the system furthermore comprising means adapted so that the handheld device can communicate with the item of equipment at a second frequency included in a second predetermined frequency span distinct from the first, with a view to permitting or preventing access and/or starting, **characterized in that** it furthermore comprises means (4-6; 4-6, 8) for detecting by the device (2) or by the item of equipment (1) the presence of frequency signals which are emitted independently of the access and/or starting system and are disturbing in respect of the said first frequency span, and means for automatically switching the system from its nominal mode of operation at the first frequency to a backup mode of operation at the said second frequency when the presence of disturbing signals in the first frequency span has been detected, and for automatically switching the system from its backup mode of operation to its nominal mode of operation as soon as the automotive vehicle (V) quits the zone in which the presence of disturbing signals has been detected.

12. System according to Claim 11, **characterized in that** the means for detecting the presence of disturbing signals comprise reception means comprising a radiofrequency reception antenna (10; 20; 14; 25) linked to an antenna drive (11; 21; 15; 26), the said antenna drive furthermore comprising automatic gain control means making it possible to adjust the sensitivity of the reception means, and delivering a disturbing signals detection signal when the gain drops below a certain predetermined threshold.

13. System according to Claim 11, **characterized in that** the means for detecting the presence of disturbing signals comprise reception means comprising a radiofrequency reception antenna (10; 20; 14; 25) linked to an antenna drive (11; 21; 15; 26), and a signal processing module counting the number of rising edges received over a given time window, and delivering a disturbing signals detection signal when the number counted is greater than a predetermined threshold number.

14. System according to any one of Claims 11 to 13, **characterized in that** the handheld device (2) is a remote control comprising means (20-23) generating, on action of the user, a radiofrequency frame in the nominal mode of operation, and **in that** the item of equipment (1) situated at the level of the automotive vehicle (V) comprises a radiofrequency reception antenna (10) linked to a radiofrequency receiver (11) piloted by a pilot module (12) of the item of equipment.

15. System according to Claims 12 and 14 or 13 and 14 taken in combination, **characterized in that** the radiofrequency reception antenna of the item of equipment (1) is common with the disturbing radiofrequency signals reception antenna (10).

16. System according to any one of Claims 11 to 15, **characterized in that** it comprises, for the backup mode of operation:
- at the level of the handheld device (2), means (23, 24) for generating an infrared frame;
- at the level of the vehicle (V), means (12, 13) for receiving and processing the infrared frame.

17. System according to Claims 14 and 16 taken in combination, **characterized in that** the means for generating a radiofrequency frame comprise a control button (22) linked to a pilot module (23) piloting a radiofrequency emitter (21) and a radiofrequency emission antenna (20), and **in that** the means for generating the infrared frame comprise a diode (24) linked to the same pilot module (23) so as to generate, on action of the said control button, the infrared frame of the same format as the radiofrequency frame.

18. System according to Claims 14 and 16 taken in combination, **characterized in that** the means for receiving and processing the infrared frame at the level of the vehicle comprise an infrared receiver (13) linked to the said pilot module (12) of the item of equipment.

19. System according to any one of Claims 11 to 13, **characterized in that** the handheld device (2) is an identifier generating, in the nominal mode of operation, on receipt of an interrogation signal emitted by the item of equipment (1), at least one radiofrequency response signal containing an identification code, access to the automotive vehicle and/or starting of the automotive vehicle being permitted only if the identification code has been identified beforehand.

20. System according to Claim 19, **characterized in that** it comprises
- at the level of the identifier (2):
• a radiofrequency emission/reception antenna (25) linked to an emitter/receiver (26), the whole being driven by a pilot module (27) of the identifier for the reception of the interrogation signal and the emission of the radiofrequency response signal in nominal mode of operation;
• a low frequency antenna (28) for communication with the item of equipment (1) in backup mode of operation;
- at the level of the item of equipment (1):
• a radiofrequency emission/reception antenna (14) linked to an emitter/receiver (15), the whole being driven by a pilot module (16) of the item of equipment for the emission of the interrogation signal and the reception of the radiofrequency response signal in nominal mode of operation;
• a low frequency antenna (31) for communication with the identifier (2) in backup mode of operation.

21. System according to Claim 20, **characterized in that** the low-frequency antenna (28) of the identifier (2) is driven by the pilot module (27) of the identifier (2), which switches either to this low-frequency antenna, or to the radiofrequency emission/reception antenna (25) as a function of the mode of operation of the system.

22. System according to either one of Claims 20 or 21, **characterized in that** the low-frequency antenna (31) of the item of equipment (1) is fed by an antenna drive (19) piloted by the pilot module (16) of the item of equipment, and **in that** the low-frequency antenna (28) of the identifier is charged with energy by the low-frequency antenna (31) of the item of equipment when the identifier is placed facing this antenna in backup mode of operation.

23. System according to any one of Claims 20 to 22, **characterized in that** the item of equipment (1) furthermore comprises a second low-frequency antenna (30) facing which the low-frequency antenna (28) of the identifier (2) may be placed with a view to making the starting secure.

24. System according to Claims 22 and 23 taken in combination, **characterized in that** the two low-frequency antennas (30, 31) of the item of equipment are linked alternately to the antenna drive (19) by a means of selection (32) as a function of the mode of operation of the system.

25. System according to Claim 24, **characterized in that** the item of equipment (1) comprises a reader comprising in particular the second low-frequency antenna (30) and means (18) for detecting the presence of the identifier (2) in the reader allowing the control of the selection means (18) on one or the other of the low-frequency antennas (31, 31) as a function of the presence or of the absence of the identifier in the reader.
